# EUROPEAN PATENT APPLICATION

(11) **EP 4 428 522 A1**
(43) Date of publication of application: **11.09.2024**
(21) Application number: 23161031.2
(22) Date of filing: 09.03.2023
(51) Int. Cl.: G01N 21/17, G01N 21/45

(54) **A MEASUREMENT SYSTEM AND METHOD FOR DETECTING A MOLECULE CONCENTRATION IN A MEDIUM**

(71) Applicant: Nederlandse Organisatie voor toegepast-natuurwetenschappelijk Onderzoek TNO, 2595 DA 's-Gravenhage (NL)
(72) Inventor: CHENG, Lun-Kai, 2595 DA 's-Gravenhage (NL); XU, Man, 2595 DA 's-Gravenhage (NL)
(74) Representative: V.O.

(57) **Abstract**

A system (1) for detecting substance concentration in a medium (3), comprising: a measurement optical fiber (5) with a first reflecting element (7), a second reflecting element (9), and a hollow core fiber (11) arranged between the first and second reflecting elements (7, 9), the hollow core fiber (11) configured to receive the medium (3); an excitation unit (13) for generating a photo-thermal excitation effect in the core of the hollow core fiber (11); and a sensing unit (17) with a light source (19) that directs light towards the measurement fiber (5), wherein the incident light is divided by the first reflecting element (7) of the measurement optical fiber (5) into transmitted (10b) and reflected light (10a), and guided to a detector (21) via an optical line (23). The sensing unit (17) is adapted to prevent interference between the reflected (10a) and returned transmitted light (10c) which has been reflected by the second reflecting element (9) and transmitted through the first reflecting element (7) in the optical line (23).

## Description

### FIELD OF THE INVENTION

The invention relates to a system and method for detecting a substance concentration in a medium. Additionally, the invention relates to the use of the system for detecting a substance concentration in a medium. The invention also relates to a lithography system including the system or configured to perform the method for measuring an amount of oxidants and/or chemical molecules within the lithography system.

### BACKGROUND TO THE INVENTION

Optical measurement systems can be employed for detecting a substance concentration in a medium. An example of such system is a photoacoustic spectroscopy system. Typically, such a system includes a fiber coupled pump laser, a modulator, and a hollow core fiber which is connected to the pump laser system by a combiner/splitter. A hollow core fiber is a type of optical fiber that is made with a hollow core, or empty space, typically running down the middle. Light can travel through the core of the fiber by the light guiding property of the fiber.

In conventional photoacoustic spectroscopy, when the wavelength of the pump laser matches with the absorption line of the gas to be analyzed, part of the pump laser optical power will be absorbed and converted into thermal energy (cf. heat). By modulating the pump laser power using an amplitude modulator, alternating heating up the gas will result in a pressure change via the thermal expansion of the gas. The pressure level depends on the laser power, the absorption coefficient of the gas for the laser wavelength, the interaction length between the pump laser and the gas, and the concentration of the gas. The modulator determines the frequency of the pressure modulation and enables frequency domain analysis or lock-in likes measurement technologies to improve the signal to noise ratio and hence the sensitivity of the acoustic pressure measurement. It is known in the art to use the hollow core fiber within a Fabry-Perot interferometer.

Although the known optical measurement systems can be highly sensitive and can detect very small concentrations of substances/molecules, there is a strong desire to make them more accurate, reliable and suitable for multiplexing. This would provide a significant advantage for their use in various industrial systems, such as a lithography system.

### SUMMARY OF THE INVENTION

It is an object of the invention to provide for a method and a system that obviates at least one of the above mentioned drawbacks.

Additionally or alternatively, it is an object of the invention to provide for a system and method that can improve the detection of a substance concentration in a medium using a hollow core fiber sensor.

Additionally or alternatively, it is an object of the invention to provide for a system and method that can increase the accuracy of the detection of a substance concentration in a medium using a hollow core fiber sensor.

Additionally or alternatively, it is an object of the invention to provide for a system and method that enables multiple hollow core fiber sensors in a fiber in an advantageous way.

Thereto, the invention provides for a measurement system for detecting a substance concentration in a medium, the system comprising: a measurement optical fiber including a first reflecting element, a second reflecting element and a hollow core fiber arranged in between the first reflecting element and the second reflecting element, the hollow core fiber being configured to receive the medium, e.g. by means of opening(s) to the hollow core fiber; an excitation unit configured to generate a photothermal excitation effect in the core of the hollow core fiber; and a sensing unit comprising a light source configured to direct light towards the measurement fiber with the hollow core fiber, wherein an incident light is divided on the first reflecting element of the measurement optical fiber into a transmitted light and a reflected light, and wherein the transmitted light returns to and passes the first reflecting element after being reflected by the second reflecting element of the measurement optical fiber, and wherein the reflected light and the returned transmitted light are guided to a detector by means of an optical line; wherein the sensing unit is adapted to prevent interference between the reflected light and the returned transmitted light in the optical line.

The measurement system has a significant advantage in that it improves the stability of the measurements. This means that the output signals used to calculate the path difference at the detector are less affected by changes in the intensity of the light. As a result, the measurement results are more accurate.

In some examples, the hollow core fiber may include the reflecting elements. In some examples, a measurement fiber may be employed that includes the reflecting elements with hollow core fiber extending over a portion between said reflecting elements. It is possible that other in-fiber reflecting elements with extra functionality e.g. fiber Bragg grating with wavelength dependent reflectivity, are used instead of a reflecting surface based on Fresnel reflection between the hollow core fiber and the normal solid core fiber. Advantageously, the fiber Bragg grating with wavelength dependent reflectivity also enables wavelength multiplexing and hence multiple hollow core fiber sections with their own reflecting elements in a single fiber.

Optionally, the sensing unit is configured to combine the reflected light and the returned transmitted light from a hollow core fiber section in the optical line without causing interference with each other.

The system is designed in a way that there is no interference between the reflected light beams in the optical line. This not only increases the accuracy and/or stability of the measurements, but also makes it possible to place multiple hollow core fibers together in a single line of optical fiber. This means that multiple measurements can be taken at the same time, making the system even more efficient.

The light source of the sensing unit may be configured to emit light having an operational wavelength that does not overlap with the wavelength of the light emitted by the excitation unit (e.g. pump laser). The sensing unit is configured to sense the effect of the excitation unit on the medium inside the hollow core fiber based on light reflected by the two reflecting elements, whilst avoiding direct interference between the two beams reflected towards the detector through the optical line. A first beam is reflected back from the first reflecting element, and the second beam is reflected back from the second reflecting element. The two beams can be directed by means of the optical line to the detector where the interference is actually generated.

Optionally, at least one of the first reflecting element and the second reflecting element are part of the hollow core fiber. In some examples, both the first reflecting element and the second reflecting element are part of the hollow core fiber. The hollow core fiber may thus include the first reflecting element and the second reflecting element of the measurement optical fiber. In some examples, the first reflecting element and the second reflecting element are arranged at the ends of the hollow core fiber. The hollow core fiber may be a part of the measurement optical fiber.

Optionally, the reflecting elements to form the measurement optical fiber are not at the ends of the hollow core fiber but in a an optical fiber in (optical) connection with the hollow core fiber.

The reflection property or reflectivity of the both reflecting surfaces/elements may be adequately chosen (e.g. optimized) for the wavelength emitted by the light source of the sensing unit.

Optionally, the incident light generated by the light source has a coherence length that is smaller than two times the optical path length between the first and second reflecting elements.

The light beam emitted by the light source of the sensing unit may be reflected by the first reflecting element and the second reflecting element, resulting in two distinct light beams, namely the received reflected light beam and the returned transmitted light beam. Both reflected light beams are guided to the detector using an optical line. The sensing unit is configured such that it is prevented that direct interference between said two distinct light beams is obtained in the optical line. The interference is only generated and obtained at the detector.

A coherence length is the propagation distance over which a coherent wave (e.g. an electromagnetic wave) maintains a specified degree of coherence. Wave interference can be strong when the paths taken by all of the interfering waves differ by less than the coherence length. According to the system and method of the disclosure, the light source of the sensing unit is configured to generate an electromagnetic wave (e.g. light) that has a coherence length that is significantly shorter than the length between the two reflecting elements. Once the electromagnetic wave (e.g. light) is reflected and is guided towards the detector (via the optical line that transmits the reflected light paths), there is not a direct measurable/significant interference. So, there may be no measurable/significant interference occurring in the reflected path of the electromagnetic wave reflected by the first reflecting element and the second reflecting element. It will be appreciated that the coherence function decreases with the path difference. However, the interference may theoretically not be exactly zero even the path difference is much longer than the coherence length.

The coherence length of the electromagnetic wave generated by the light source of the sensing unit is significantly shorter than the length between the two reflections occurring at the first reflecting element and the second reflecting element. Hence, reflected beams, namely the received reflected light and the returned transmitted light, have a path difference that is larger than the coherence length. Once said reflected beams are combined in the optical line, no measurable interference is occurring, since the path difference is larger than the coherence length of the electromagnetic wave generated by the light source of the sensing unit. With other words, no direct interference between the two reflected beams will occur in the proposed configuration. The reflected beams are guided to the detector, that is configured to generated interference and perform an interferometric measurement.

Optionally, the reflectivity of the reflecting elements is selected to avoid strong reflection of the excitation light. Additionally or alternatively, the reflectivity of the reflecting elements is selected to adapt to the wavelength of the sensing unit to provide comparable optical power from the first and second reflecting elements while avoiding significant light from multiple reflections, e.g. about 10% reflectivity for the first reflecting surface/element and about 12% reflectivity for the second reflecting surface/element.

The reflection of the sensing unit light from the first reflecting element may for instance be around 10%. The reflection from the second reflecting element may for instance be around 12% * 90% * 90% which is equal to around 10% due the passing the first reflector twice.

The reflection from the second reflecting element may also be reflected by the first reflector to generate a ghost signal by the amplitude will be around 12% * 90% * 10% * 12% * 90% which is equal to around 0.1% which is much lower than the 10% of the reflections of interest.

An optical circulator (OC) may be employed for redirecting light. The optical circulator may be configured to avoid or prevent that reflected light goes back to the light source of the sensing unit.

Optionally, the coherence length of the incident light is at least 10 percent smaller than two times the optical path length between the first and second reflecting elements, preferably at least 15 percent smaller, more preferably at least 20 percent smaller, even more preferably at least 30 percent smaller, most preferably at least 50 percent smaller.

An optical light source providing light with a Gaussian type of spectrum may result in a Gaussian type coherence function. In some examples, in order to effectively avoid interference, the coherence length of the incident light may be at least 50 percent smaller than two times the optical path length between the first and second reflecting elements.

Direct interference between the two reflected beams when they are combined at the optical line is prevented or not measurable or not relevant for the interferometric measurement using the detector after the optical line. Only an intensity effect may occur when the reflected beams (cf. the received reflected light and the returned transmitted light) are combined and guided by the optical line. This is in contrast to a Mach-Zender and Sagnac interferometer, in which a direct interference between the two reflected beams is obtained. In these systems, once the light beams are combined, an interference effect is already obtained and converted in the optical power of the interference signal. Any variation in the optical power will affect the processing of the interference signal and results in higher noise or lower performance.

Advantageously, the stability of the measurements can be significantly improved. For example, the output signals for calculating the path difference at the detector may be less sensitive to changes in amplitude of the intensity of the light. As a result, more accurate measurements may be obtained.

Moreover, since there is no interference between the reflected light beams in the optic line, it is possible to arrange multiple hollow core fibers next to each other in a single line of optical fiber.

Optionally, the reflectivity of the first reflecting element and the second reflecting element are selected such that light of the sensing unit with a substantially same optical power is reflected from the first reflecting element and the second reflecting element to the optical line.

Direct interference is effectively avoided as the coherence length of the laser light of the light source of the sensing unit is smaller than the path-length difference of the two reflected beams respectively reflected from the first reflecting element and the second reflecting element. The coherence length of the light source is smaller than the maximum occurring path-length difference between the two reflected beams.

Optionally, the detector, arranged after the optical line, is configured to create interference between the received reflected light and returned transmitted light.

The system and method according to the disclosure does not utilize direct interference in the optical line. The reflected light beams are guided to the detector where the interference happens. Hence, interference is only obtained in the detector. In some examples, a 3x3 interferometer is employed.

Optionally, the detector includes a beam splitter defining at least a first path and a second path, the second path being different from the first path, wherein the first path and the second path have different path lengths, wherein a difference in path length is chosen based on the distance between the first reflecting element and the second reflecting element so as to obtain interference when the beams are subsequently combined by means of a beam combiner.

In some examples, the difference in path length can be substantially equal to two times the optical path length between the first reflecting element and the second reflecting element.

The interference signal can be converted by an optical-electrical converter to a signal which can be processed by a processing unit, such as for instance a computer, in order to calculate the photothermal induced change in the optical path of the hollow core fiber. The optical path may be for example defined as the product of the physical fiber length and the effective refractive index. Since the change in the optical path is related to the molecule concentration, this can be measured by analysing the interference signal.

Advantageously, the system is configured in such a way that direct interference between output beams of the hollow core fiber is prevented, by selecting the coherence length of the light emitted by the light source of the sensing unit based on the distance between the reflecting elements.

Optionally, the detector is an interferometer with a compensating interferometer arm imbalance which is substantially equal to two times the optical path length of the hollow core fiber.

The returned transmitted light is going through the path between the first reflecting element and the second reflecting element twice. Therefore, in order to guarantee that the reflected light beams do not directly interfere with each other, the coherence length has to be smaller than two times the length defined between the first reflecting element and the second reflecting element. In some examples, this path corresponds to the hollow core fiber length, if the hollow core is defined by the space between the first reflecting element and the second reflecting element.

The excitation unit may have a pump laser configured to match with the absorption of the medium and cause a thermal expansion of the medium, which results in a pressure change. For example, if the medium inside the interior/core of the hollow core fiber is a gas, a pressure change can be obtained as a result of the excitation by the excitation unit. The pressure change may induce a change of the refractive index. An increased pressure may result in an increased refractive index. Although the physical length remains the same, a variation/change in the optical path length between the two reflecting elements may be determined since the refractive index is changed due to the excitation by the excitation unit (e.g. pump laser).

Optionally, the excitation unit is a photonic excitation unit configured to pump excitation light into the core of the hollow core fiber for inducing the photothermal excitation effect, wherein the incident light generated by the light source of the sensing unit has an operational wavelength not overlapping with a wavelength of light employed by the photonic excitation unit for generating the photothermal excitation effect in the core of the hollow core fiber.

The excitation unit may be configured to cause a perturbation in the optical waveguide. The perturbation can be generated in different ways. In some examples, the perturbation is induced by using a pump laser. The hollow core fiber may be fluid-filled (e.g. gas filled).

Optionally, a plurality of hollow core fiber sections with corresponding reflecting elements are arranged in series in one or more optical fibers, wherein the plurality of hollow core sections is excited by the same excitation unit, and wherein the detector is configured to interrogate the plurality of hollow core fiber sections.

Since there is no direct interference between the received reflected light and the returned transmitted light, it becomes possible to put a plurality of hollow core fibers in a single optical line. The beams will not interfere, and in the detection part it can be compensated for enabling the interference measurements for the plurality of hollow core fibres. This enables employing a system with a large network of hollow core fiber measurement points. In some examples, the measurements are multiplexed.

Optionally, the plurality of hollow core fiber sections are multiplexed in a fiber network.

In some examples, multiple sections of hollow core fiber may be incorporated into one optical fiber. It is also possible to use a fiber splitting network to put multiple hollow core fibers in multiple fibers. Various implementations are possible. For example, it is possible to arrange a one dimensional array of hollow core fibers. However, it is also possible to employ a multi-dimensional array of hollow core fibers. The system and method according to the disclosure enables employing a large number of sensors (e.g. gas cells) whilst keeping an adequate measurement accuracy. The plurality of hollow core fibers may be excited using the same excitation unit (e.g. pump laser). Moreover, a single detector may be used in an effective way for the plurality of hollow core fibers, resulting in a cost-effective solution (cf. relatively low cost per sensor).

Optionally, the system is configured to perform wavelength multiplexing by means of wavelength selective reflecting elements or coherence multiplexing.

The wavelength selective reflecting elements may for example be obtained by means of a fiber Bragg grating.

Different multiplexing schemes may be employed. In some examples, a wavelength multiplexing is employed by using wavelength selective reflecting elements. For example, a first reflecting element may be configured to reflect a first wavelength, whilst being transparent for a second wavelength. Various wavelength selective reflecting elements may be employed. In some examples, a coherence multiplexing is employed for instance by using dedicated optical paths that can be selectable or tunable for compensation.

Optionally, the path length of at least one of the paths defined by the beam splitter is selectable, wherein the path length is selectable by adjusting the path length or selecting an alternative path.

In some examples, the detector may have multiple interferometers, each one having a predetermined path compensation. For example, the light may be split into two different stand-alone detection interferometers, each one having a fixed path compensation, for the first and second hollow core fiber (e.g. gas cell).

Optionally, the excitation unit comprises an excitation light source configured to generate the photothermal excitation effect in the core of the hollow core optical fiber. The excitation light source may be configured to have a wavelength selected based on the adsorption of the molecule to be detected at said wavelength. The wavelength may be selected such that the light is substantially transparent to the first and second reflecting elements. In this way, the reflecting elements may have minimum effect on the excitation wavelength.

Optionally, the detector includes an optical filter configured to filter of the photonic excitation unit. The optical filter can effectively mitigate background noise.

Optionally, the reflecting elements are reflecting surfaces. Optionally, the reflecting surfaces are reflectors, mirrors or the like.

The power of the photothermal excitation is proportional to the photothermal effect. The pressure change induced into the core of the hollow core fiber can be related to the power of the pump laser and the concentration of the substance in the medium. Hence, it can be important that the power of the pump laser does not fluctuate too much in order to accurately determine the concentration of the substance in the medium. A monitoring unit may be employed that is configured to monitor the pump power. In some examples, a reflector is arranged to partially reflect the light emitted by the pump laser towards a detection system. In this way, it can be monitored what the output power of the pump laser was, so that it becomes possible to compensate for fluctuations. Compensation may be done by adjusting one or more operating parameters of the pump laser. Additionally or alternatively, the compensation may be done by adjusting/correcting in the signal processing. If it is determined that during the measurement the pump power has been changed, that change/fluctuation can be accurately taken into account and accurately compensated for in the calculation and/or post-processing. The output can be recalculated based on that, providing significantly more accurate results.

It will be appreciated that it is also possible to monitor the power of the excitation unit without employing a reflector. For instance, the light generated by the pump laser may be branched off without using a reflector.

In some examples, the hollow core fiber is employed as a gas cell configured to house a gas to be analysed. The hollow core fiber can have an opening to allow gas to enter an interior volume thereof. The sensing unit may be configured to measure a change of the refractive index of the gas inside the core of the hollow core fiber based on a change of a value indicative of the optical path length. The excitation unit may induce a pressure change due to thermal expansion as a result of laser absorption. The laser power of the pump laser may induce a pressure modulation inside the hollow core fiber which can generate a change in the refractive index of the gas inside the core of the hollow core fiber.

According to an aspect, the invention provides for a measurement method for detecting a substance concentration in a medium, the method including: providing a measurement optical fiber including a first reflecting element, a second reflecting element and a hollow core fiber arranged in between the first reflecting element and the second reflecting element, the hollow core fiber being configured to receive the medium, for example by means of opening(s) to the core of the hollow core fiber; providing an excitation unit configured to generate a photothermal excitation effect in the core of the hollow core fiber; and providing a sensing unit comprising a light source configured to direct light towards the measurement fiber with the hollow core fiber, wherein an incident light is divided on the first reflecting element of the measurement optical fiber into a transmitted light and a reflected light, and wherein the transmitted light returns to and passes the first reflecting element after being reflected by the second reflecting element of the measurement optical fiber, and wherein the reflected light and the returned transmitted light are guided to a detector by means of an optical line; wherein the sensing unit is adapted to prevent interference between the reflected light and the returned transmitted light in the optical line.

According to the disclosure, direct interference of the two beams is prevented. For this purpose, a light source can be used of which the coherence length is shorter than the distance between the two reflections. As the coherence length is shorter than the distance between the two reflections from the first reflecting element and, the two reflections from the first reflecting element and the second reflecting element will not interfere with each other in the optical line.

In some examples, the sensing unit is configured to generate two reflections (cf. first and second reflecting elements), guide the two reflections without interference to a detector, wherein the detector includes a path imbalance interferometer and an optical electrical converter.

In some examples, series of hollow core fiber section with its reflectors are connected in a fiber which can be pumped by the same pump laser. The detection part of the system may require an arrangement which is suitable to interrogate the different HCF sections which are multiplexed in a fiber network. In some examples, wavelength domain multiplexing is employed which uses reflector pairs operating at different wavelengths for different hollow core fiber gas cells is, e.g. by using FBG reflector. In some examples, a configuration is employed to monitor pump laser power of each HCF gas sensor. In some examples, light in transmission is used where the two reflectors act as a Fabry-Perot interferometer. The application of high finesse Fabry-Perot system may require a stable light source wavelength. In some examples, a detection light source wavelength monitoring system may be employed. In some examples, multiple pump lasers for different absorption mediums are used without scanning the pump laser source.

According to an aspect, the invention provides for a lithography system including a system according to the disclosure, or configured to perform the method according to the disclosure, for measuring an amount of oxidants and/or chemical molecules within the lithography system.

According to an aspect, the invention provides for a gas sensor system including the system according to the disclosure. The gas sensor system can employ one or more hollow core fibers with photoacoustic technology to generate a dynamic signal which is detected remotely with an fiber interferometer system.

The photoacoustic gas sensor according to the disclosure can be relatively small in design. The sensor is a small optical fiber with multiple-sensor and multiple-gasses detection capability. The interferometric detection allows for multiplexing, enabling the arrangement of a large sensor network for example for contamination sensing. The system can have a high sensitivity (e.g. ppm to ppb). Furthermore, multiple gasses and/or multiplexed sensor network can be employed. In some examples, the detector is based on a 3x3 detection fiber interferometer.

According to an aspect, the invention provides for a system for detecting the concentration of a substance in a medium, comprising of an optical fiber with a first and second reflecting element, and a hollow core fiber situated between them, configured to receive the medium. The system includes an excitation unit for generating a photothermal effect within the hollow core fiber, and a sensing unit with a light source and detector that is designed to separate and prevent direct interference between a beam reflected from the first reflecting element and a beam reflected from the second reflecting element before arriving to the detector. The reflected beams are guided to a detector which is configured to cause interference between said beams. Advantageously, accurate measurement results can be obtained in an effective way.

The optical sensing system may use a combination of wavelength and coherence length manipulation in order to effectively prevent direct interference between the two beams, resulting in a more accurate measurement of changes in the medium within the hollow core fiber. For the same hollow core sensing fiber section the coherence length is relevant for avoiding the direct interference of the two reflections. The wavelength selection is for wavelength multiplexing of a network with multiple sensing fiber sections.

The system and method according to the disclosure can be used for gas or chemical sensing. For instance, the system and method can be used for ppm and/or ppb level contamination sensing system for use in semiconductor systems. The production process for semiconductors can thus be improved and better controlled. The system and method can also be used in other processes or industries (e.g. energy). Furthermore, in combination with a tunable/selectable wavelength light source of the excitation unit, the system and method can be used for the detection of different gasses. The different gasses can have different absorption wavelength for the photothermal effect.

It will be appreciated that the medium can be a fluid. For example, the medium can be a gas, a liquid, or a mixture thereof. Optionally, the hollow core is filled with the medium.

The substance concentration may be a molecule concentration. For example, the system and method according to the disclosure may be used for detection of methane, carbon dioxide, etc. in a gas. However, it can be also used for detecting substances in a liquid.

It will be appreciated that a coherence length is the propagation distance over which a coherent wave (e.g. an electromagnetic wave) maintains a specified degree of coherence. Wave interference is strong when the paths taken by all of the interfering waves differ by less than the coherence length. The coherence length of a light source is a measure of how well-behaved the phase of the light is over time. In an interferometer, two beams of light are reflected off by its own mirror and then recombined. If the light is coherent, the phase of the two beams will be well-behaved, and the interference pattern produced by the recombined beams will be stable and easy to interpret. If the coherence length of the light source is short, the phase of the light may vary significantly, which can make the interference pattern difficult to interpret. In general, the longer the coherence length of the light source is in comparison to the path difference, the more stable and well-defined the interference pattern will be.

It will be appreciated that the detection part does not necessarily require a photothermal excitation. The electromagnetic wave (cf. light) may be confined by the core of the hollow core fiber. A medium such as a fluid can be put inside the hollow core fiber. Once the excitation is converted in a refractive index change, this can be detected. Different excitation methods may be employed. For instance, instead of an optical absorption effect, a radiofrequency excitation signal may be radiated into the fiber in a well-controlled fashion. In some alternative examples, excitation may be performed from the outside. However, this may result in a not well defined configuration, since it may be desired to focus the e.g. radiofrequency excitation signal into the core of the hollow core fiber in a line configuration. This may result in a complicated optical system for obtaining adequate alignment, since the core of the hollow core fiber is for example around 9 micron in diameter.

It will be appreciated that any of the aspects, features and options described in view of the system apply equally to the method and the described use and lithography system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a system;
Fig. 2 shows a schematic diagram of an embodiment of a system;
Fig. 3 shows a schematic diagram of an embodiment of a system;
Fig. 4 shows a schematic diagram of an embodiment of a system;
Fig. 5 shows a schematic diagram of an embodiment of a system;
Fig. 6 shows a schematic diagram of an embodiment of a system;
Fig. 7 shows a schematic diagram of an embodiment of a system; and
Fig. 8 shows a schematic diagram of an embodiment of a system;

### DETAILED DESCRIPTION

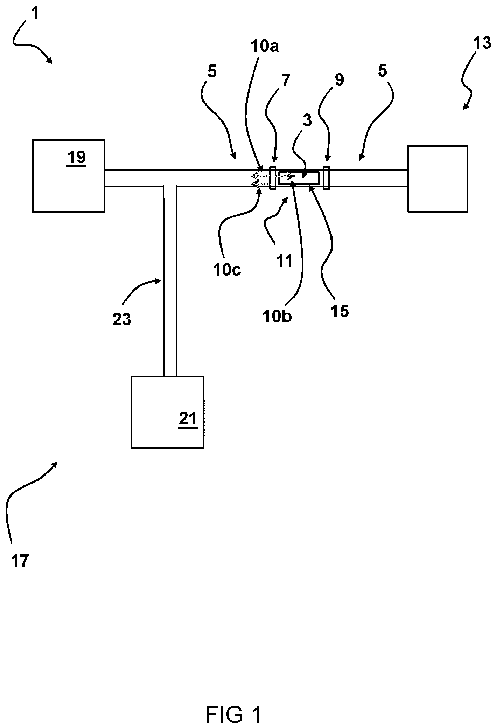

Fig. 1 shows a schematic diagram of an embodiment of a measurement system 1 configured to detect a substance concentration in a medium 3. The system 1 comprises: a measurement optical fiber 5 including a first reflecting element 7, a second reflecting element 9 and a hollow core fiber 11 arranged in between the first reflecting element 7 and the second reflecting element 9, the hollow core fiber 11 being configured to receive the medium 3. The system 1 further includes an excitation unit 13 configured to generate a photothermal excitation effect in the core 15 of the hollow core fiber 11. The system 1 further includes a sensing unit 17 comprising a light source 19 configured to direct light towards the measurement fiber 5 with the hollow core fiber 11, wherein an incident light is divided on the first reflecting element 7 of the measurement optical fiber 5 into a reflected light 10a and a transmitted light 10b, and wherein the transmitted light 10b returns to and passes the first reflecting element 7 after being reflected by the second reflecting element 9 of the measurement optical fiber, and wherein the reflected light 10a and the returned transmitted light 10c are guided to a detector 21 of the sensing unit 17 by means of an optical line 23; wherein the sensing unit 17 is adapted to prevent interference between the reflected light 10a and the returned transmitted light 10c in the optical line 23.

Although the hollow core fiber may extend all the way between the first reflective element 7 and the second reflecting element 9, it is also possible that the hollow core fiber only extends over a portion of the optical fiber between the first reflective element 7 and the second reflecting element 9.

In some examples, the excitation unit 13 includes a pump laser. The pump laser may also be arranged at the side of the sensing unit.

The sensing unit 17 may use light reflected by two different reflecting elements 7, 9 to sense the effect of an excitation unit on a medium 3 inside a hollow core fiber 11. The light source 19 of the sensing unit 17 is configured to emit light with a wavelength that does not overlap with that of the excitation unit 19, and the coherence length of the light source is shorter than the distance between the two reflections. This prevents direct interference between the two beams reflected towards the detector 21, and the interference is only obtained at the detector 21. The two reflected light beams can be guided to the detector using an optical line 23, wherein interference in said optical line is prevented due to the configuration of the system 1.

The first reflecting element 7 may be a partial reflector. Some light may pass through the first reflecting element 7 towards the second reflecting element 9. The reflections of the light (cf. electromagnetic wave) combined in the optical line 23 do not interfere with each other because path length difference between the reflections is larger than the coherence length of the light generated by the light source of the sensing unit 17.

Advantageously, by suitably selecting the coherence length, direct interference between the received reflected light and returned transmitted light in the optical line can be effectively avoided. The stability of the measurements can be significantly enhanced. The accuracy of the measurements can be increased as the measurements become less sensitive to the change in intensity of light in the optical line 23.

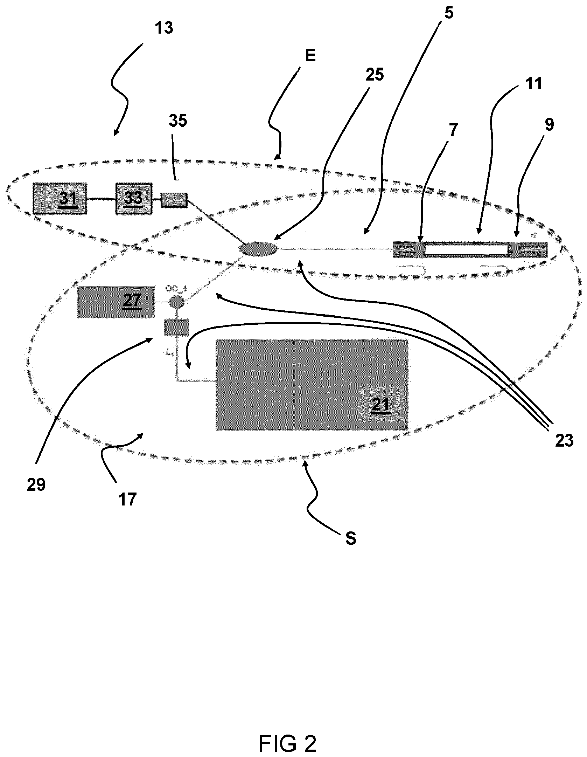

Fig. 2 shows a schematic diagram of an embodiment of a system 1. The system 1 employs sensing unit 17 to detect changes in a medium within a hollow core fiber 11. The sensing unit 17 employs a light source with a wavelength that does not overlap with that of an excitation unit, such as a pump laser, in order to avoid direct interference between the two beams. The light source of the sensing unit has a coherence length that is shorter than the distance between the two reflections, thus preventing direct interference between the two beams reflected towards the detector.

The system 1 is designed such that the first beam is reflected back from the first reflecting element 7 and the second beam is reflected back from the second reflecting element 9. These two beams are then directed to the detector 21 via an optical line 23, at which the interference between the reflected beams is generated. The sensing unit 17 is configured to sense the effect of the excitation unit 13 on the medium inside the hollow core fiber 11 based on the light reflected by the two reflecting elements.

In the shown example, the system 1 is provided with a combiner/splitter 25 and the excitation unit 13 and the sensing unit 17 are optically connected to the measurement optical fiber 5 via the combiner/splitter 25. The part of the system 1 used for excitation is marked E, and the part of the system 1 used for sensing is marked S. The sensing unit 17 is provided with a light source 27 that is optically connected to an optical circulator OC. Between the optical circulator OC and the detector 21 of the sensing unit 17, a filter 29 is provided. The filter 29 may be employed for eliminating light from the pump laser. The light source (27) may already include a filter for coherence length adaptation. In this example, the excitation unit 13 includes a pump laser 31, a modulator 33 and a filter 35.

In some examples, the light source (27) is a broadband light source, such as for example an amplified spontaneous emission light source or any other suitable light source, in combination with a spectral filter for achieving the desired optical bandwidth and hence the coherence length for the sensing unit.

The measurement optical fiber 5 is provided with a hollow core fiber 11. In this example, the hollow core fiber includes the first reflecting element 7 and the second reflecting element 9. However, the first and second reflecting elements 7, 9 may also be arranged at other locations in the measurement optical fiber 5.

In some examples, the system 1 is used in a gas sensing system using the photoacoustic effect with a relatively high sensitivity and flexibility obtained by means of fiber optic sensing. In this example, the system 1 includes a laser excitation refractive index change part (cf. excitation E) with a hollow core fiber (HCF) as gas cell and a detection part (cf. sensing S) in order to measure the change of the hollow core fiber gas cell. These two parts are combined by a combiner/splitter 25 to share the common hollow core fiber.

In some examples, the core of the hollow core fiber is employed as the gas cell. Side channel(s) to the hollow core can be made in the fiber to allow gas composition flushing into the hollow core. The hollow core of the dedicated hollow core fiber (HCF) based on photonics bandgap technology can act as a waveguide of the pumped laser. The waveguided mode has a well-defined mode profile which ensures a stable intensity distribution in the hollow core (e.g. the gas cell) and hence a stable interaction with the gas to be analyzed. This in contrast to conventional free space optical beam which has fundamentally a beam divergency. Furthermore, in the exemplary configuration, the laser absorption induced thermal expansion generates a pressure change which results in a change in the refractive index of the gas filled hollow core of the fiber. This is the parameter that will be detected by our interferometric detection system. Therefore, a fix modulation frequency of the pump laser to generate acoustic signal is not required. A modulated pump laser will enable the analysis of the data of the interferometric detection system at the modulation frequency for improving the detection limit of the system.

If the medium absorbs optical energy, a higher excitation power (e.g. laser pump power of the pump laser) results in a larger absorption and a higher absorption coefficient. The generated thermal expansion pressure can be proportional to i.a. the concentration of a substance in the medium, the excitation power, absorption of the medium, the length (longer length can result in more interaction), and the interaction area. In the optical hollow core fiber, light can be propagated in a mode with a very well defined intensity profile. This ensures that the interaction parameter is always a stable configuration.

In some examples, a fiber coupled pump laser is used that is (optically) connected to the hollow core fiber with gas inlet and outlet to form a volume which contains the gas to be analyzed. If the wavelength of the pump laser is tunable, the pump laser wavelength can be set to different absorption line of different gasses. Additionally or alternatively, it is possible to combine light from different pump lasers operating at different wavelengths.

The wavelength of the light used for the photothermal excitation can be chosen based on the medium. If the medium changes (e.g. different type of gas), then the wavelength may need to be changed. A system may be usable with different types of mediums (e.g. gases), when the excitation unit (e.g. including pump laser) can emit light with different wavelengths. This can be obtained in various ways. For instance, the excitation unit may have a laser which can emit light with a variable wavelength. Additionally or alternatively, the excitation unit may include a plurality of lasers which can emit light with different wavelengths for different gases.

In contrast to conventional photoacoustic spectroscopy in which the amplitude modulated laser source induced sound pressure is detected, the system according to the disclosure does not require a fix modulation frequency of the pump laser. The pump laser power change induces pressure modulation inside the hollow core fiber will generate a change in the refractive index of the gas in the core of the hollow core fiber. In an optical fiber, the Optical Path Length (OPL) is defined as the product of the physical length L and the refractive index. The pump laser generates a change via the pressure change which is proportional to the different settings of the pump system and the concentration of the gas. The parameter can be measured by the interferometric detection part of the system of the disclosure.

Hence, the pressure change in a hollow core fiber is related to different parameters including i.a. the concentration and absorption coefficient of the fluid (e.g. gas) to be analyzed, the power and the beam configuration of the pump laser, and the interaction length between the pump beam and the fluid (e.g. gas).

The detection part of the system 1 may include a light source with an operational wavelength which is not overlapping with the wavelength(s) of the pump laser. Therefore, the detection part can be used to detect photoacoustic induced OPL change caused by different gasses with different absorption lines without fundamental changes in the configuration. This light source can include an optical filter and/or modulator to provide the operational wavelength spectrum with the required optical properties e.g. spectral linewidth or coherence length. The light source 27 may be configured to have a spectral linewidth such as to achieve the desired coherence length. The detection part of the system 1 may further include optical components to redirect the light of the light source to the hollow core fiber and the light from the hollow core fiber to the detection system. Furthermore, a hollow core fiber with a front partial reflection mirror and a rear partial reflection mirror to generate reflected and or transmitted light can be provided. The mirror can either based of Fresnel reflection or grating based Bragg reflection, for example. A detector or a detection system may be provided for measuring the changes in the total optical path length OPLT between the two reflectors either in reflection or transmission. OPLT includes the optical path length (OPL) of the hollow core fiber (HCF). An optical filter may be provided to eliminated the light from the pump laser. In some examples, the detection part of the system 1 is operated using the two reflections from the reflectors.

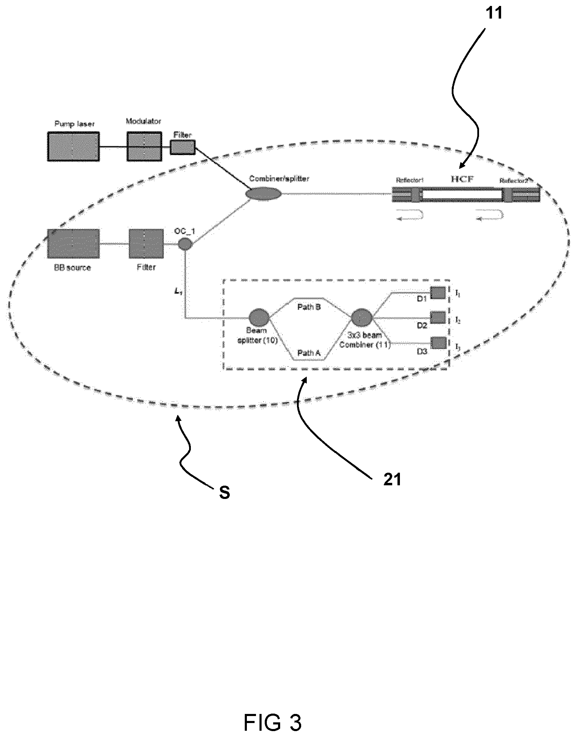

Fig. 3 shows a schematic diagram of an embodiment of a system 1. In this shown example, the system 1 is a reflection based system without using the hollow core fiber itself as interferometer. The sensing part S of the system 1 guides the received reflected light from reflector 7 to a longer path (e.g. longer optical arm), and guides the returned transmitted light from reflector 9 to a shorter path (e.g. shorter optical arm). The path difference between the longer path and the shorter path is selected such as to compensate the path difference of the beams reflected from the first reflecting element and the second reflecting element to within the coherence length of the light source. In the detector, an interference signal is obtained.

In comparison to prior art with the HCF as low reflection in-line interferometer where interference occurs at immediately combination of the two reflections, the direct interference between the two reflections is avoided in the system according to the disclosure. While the in-line interferometer in prior art uses a light source with a coherence length Lcoh comparable or longer than the optical path generated between the two reflections at both sides of the HCF (=2OPL) to generate interference signal, this is actively avoided according to the disclosure. Since the interference signal is a cosine function of the interference phase which is proportional to the ratio of OPL and the light source wavelength, changes in the wavelength or OPL will have the same effect to the interference signal.

The in-line interferometer using the HCF is relatively simple. However, information about the phase and hence the Optical Path Length (OPL) of the HCF is measured directly by the optical power I of the interference signal.

Any other parameters (e.g. laser instability, fiber components losses, etc.) which introduce changes in the measured optical power I will result in noise of the OPL measurement. Other disadvantages of the in-line interferometer concept are:
- The transfer function between OPL change and the power of the interference signal has a cosine relation and hence not linear. For accurate measurement, the interferometer can be put on the quadrature (i.e. the middle of the interference fringe where the phase is equal to (N+1/2)π. This either needs a constantly adaption of the light source wavelength or OPL.
- The in-line interferometer is not suitable for an array configuration due to noise and/or cross talk via changes in the loss of the different components for the realization of the in-line interferometer array.

In this example, the light source is configured to have a coherence length Lcoh smaller than 2x the Optical Path Length OPL of the HCF to avoid direct interference of the first reflection with the second reflection after double passing the HCF. The double passage causes the factor of 2. In some preferred examples, the coherence length is significantly smaller than 2x the OPL of the HCF.

In this example, the two reflections are sent to a detection interferometer with a compensating interferometer arm imbalance Lcomp which is equal to 2x the OPL of the HCF within the coherence length of the light source and meets the additional condition for Lcoh is about or larger than (2OPL-Lcomp). This enables the generation of interference between the two reflections using the compensating interferometer.

In this example, a multi-port (>2) fiber interferometer (either Michelson or Mach-Zehnder) is employed for canceling the effect of fluctuation in visibility and/or total intensity in the phase calculation. Example is a 3x3 Mach-Zehnder interferometer. This eliminates the needs for active quadrature stabilization for a linear response for small signal, and makes the system insensitive to amplitude fluctuation due to e.g. variation in light source power or component losses.

A 3x3 interferometer with three output signals can be employed. Advantageously, the output signals for calculating the path difference is not sensitive to changes in amplitude of the intensity. The three interference signals can be used for determining three unknown parameters. The unknown parameters may be the intensity, the visibility (V, a measure for how good the optical reflections interfere with each other), and the optical path length (OPL).

In the 3x3 interferometer, three interference signals may be obtained. The optical path difference can be calculated accurately based on the three interference signals.

The 3x3 interferometer may have a fiber optic output coupled with three output ports. The light may interfere in each of the paths, but with a mutual phase offset for the different ports. The optical power of the interfering light is going to a detector subsystem of the detector, which is configured to convert the optical power to an electrical signal. As a result, signals 11, I2, I3 are obtained which are indicative of an interference signal in the electrical domain. These signals can be processed by a computing unit such as a computer. Various signal processing methods may be applied. The phase of the interference signal can be calculated, and the optical path length can be calculated.

Although the example shown in fig. 3 includes a 3x3 Mach-Zehnder interferometer, it is also envisaged that other types of detectors are used. In the shown example, a 3x3 interferometer with three interference signals I1, I2, I3 is employed. For example, it is possible to use a different type of combiner with a different number of interference signals. However, it is advantageous to use a combiner with at least three outputs in order to accurately determine the parameters. More than three interference signals may be used in some examples. For instance, a 2x4 combiner may be used, which may have four outputs.

In contrast to prior art using the HCF as part of the arm in either Mach-Zender or Sagnac interferometer, in the shown example, reflectors are used before and after the HCF to generated reflections.

In contrast to prior art using low reflective/finesse in-line (Fabry-Perot) interferometer, according to the system of the disclosure, direct interference between the two reflections at immediately combination of the two reflected beams is avoided. Instead, in this example, the interference between the two reflections is generated with a path imbalance interferometer. Advantageously, this enables in-line multiplexing of different HCF sensors.

In some examples, the system can be used as an absolute gas concentration sensor after calibration with the optical power. The relation between the different system setting to the pressure change can be described by an equation. The pressure induce refractive index depends on the type of gasses. Finally, the optical path change or phase change measured by the interferometric detector 21 can be directly related to the refractive index change of the gas filled core of the HCF.

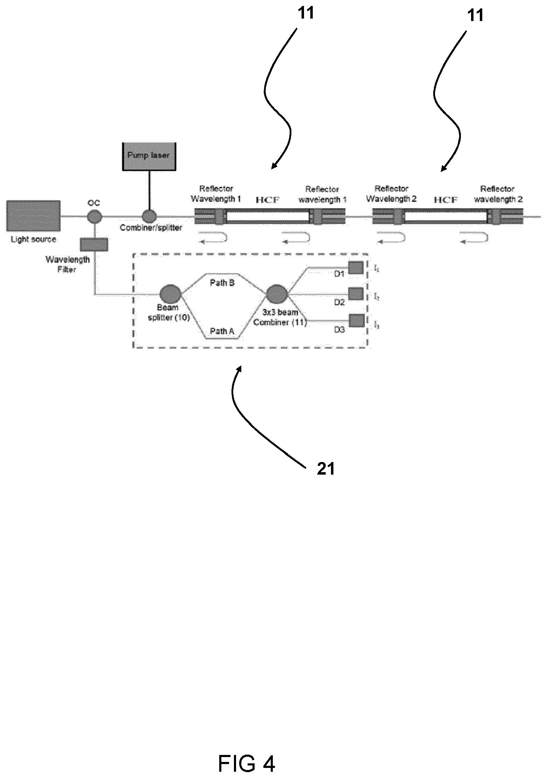

Fig. 4 shows a schematic diagram of an embodiment of a system 1 in which wavelength multiplexing of the hollow core fiber sensors is employed in a same fiber.

The hollow core fiber sensors may for example be used in a gas sensor network which can be used for multiple gasses and at multiple locations. The multiple gasses detection can be realized by tuning the wavelength of the pump laser to the absorption line of the different gasses. The measurement at multiple locations can be realized by multiplexing of the HCF gas sensors in a fiber network.

In some examples, wavelength multiplexing is employed with wavelength selection reflector pair. The HCF fiber may use a reflector pair to form a HCF gas sensor. Wavelength selective reflector pair can be used for a HCF gas sensor. Different HCF gas sensors operating at different wavelengths can be connected together in an optical fiber gas sensor network. The individual HCF gas sensor can be interrogated by applying the corresponding reflector pair wavelength using a wavelength filter to the light source and/or the detection interferometer. For example, Fiber Bragg Grating may be used to generate in-fiber wavelength dependent reflections. An exemplary configuration with HCF gas sensors in a single fiber is shown in fig. 4.

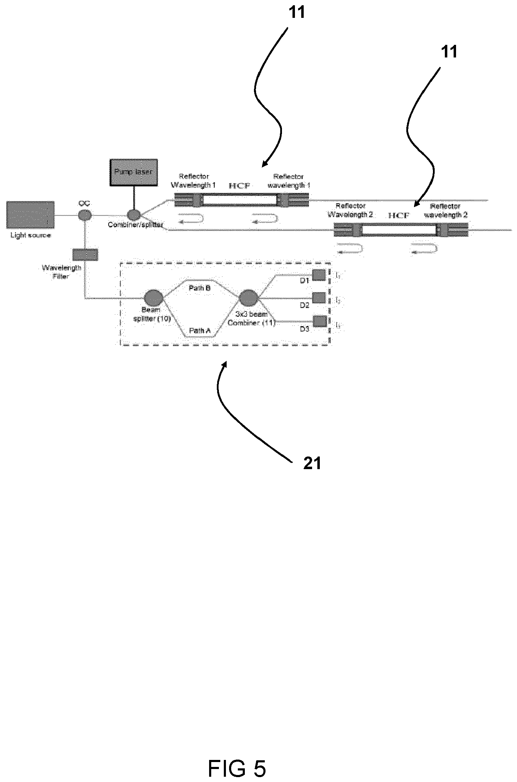

Fig. 5 shows a schematic diagram of an embodiment of a system 1 in which wavelength multiplexing of the hollow core fiber sensors is employed in different fibers. An optical switch or splitter can be used to form a network with multiple fibers.

The system 1 is configured to avoid direct interference between the beams reflected from the first reflecting element and the second reflecting element of the plurality of plurality of hollow core fibers by utilizing a light source which emits light with a coherence length shorter than the distance between the two reflections. This means that the reflections do not interfere with each other, but instead the interference is generated later on in the detector.

The measurement at multiple locations can be realized by multiplexing of the HCF gas sensors in a fiber network, which can either be for multiple HCF gas sensors in a single fiber (example shown in fig. 4) or a network of multiple fibers (example shown in fig. 5) with or without fiber optic switches. It will be appreciated that other combinations of configurations shown in figs. 4 and 5 and other types of wavelength selective reflectors is possible.

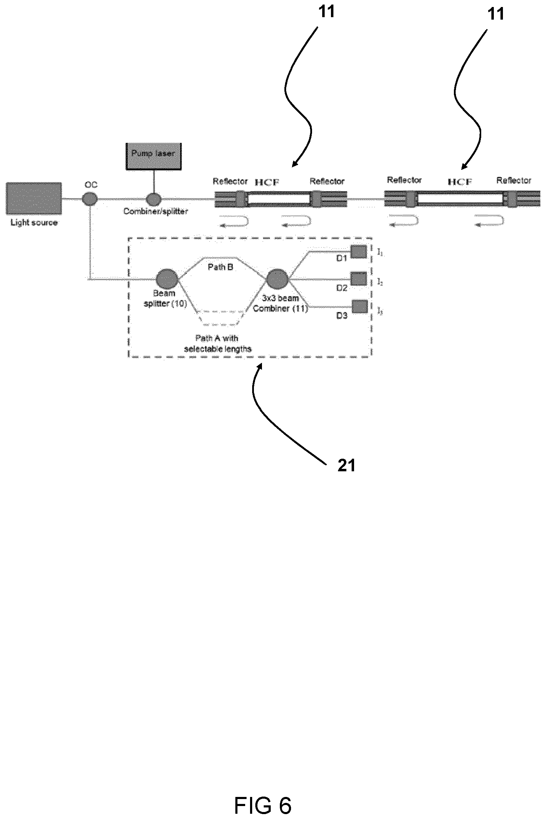

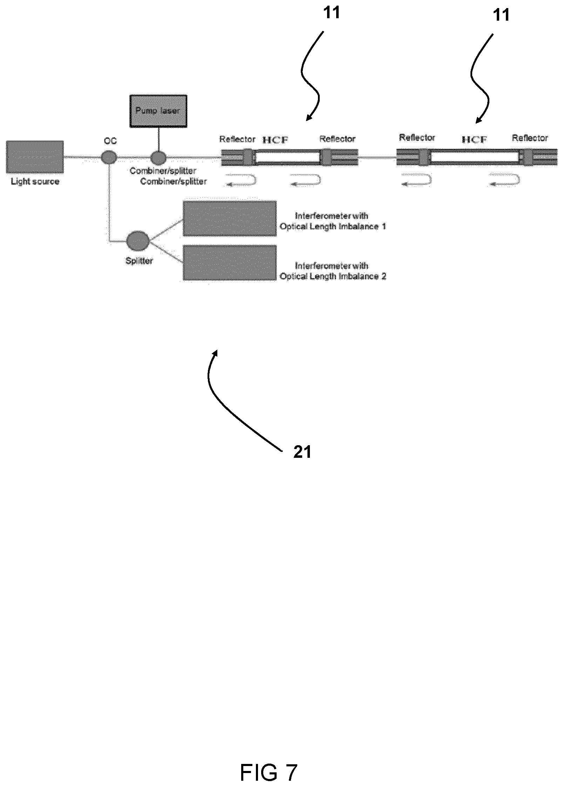

Fig. 6 shows a schematic diagram of an embodiment of a system 1 which employs coherence multiplexing by means of a path imbalance detection interferometer with selectable optical length imbalance. Fig. 7 shows a schematic diagram of an embodiment of a system 1 which employs coherence multiplexing by means of multiple interferometers with different optical length imbalances. In the examples of figs. 6 and 7, a HCF is used with an Optical Path Length (OPD) between the reflector pair which is much larger than the coherence length Lcoh of the light source. The detection interferometer has a compensating Optical Length Imbalance Lcomp to compensate the difference in path length by passing the HCF to enable interference between the two beams reflected from the two reflectors of the HCF gas sensor. The applied condition is: 2OPL - Lcomp is about or smaller than the coherence length Lcoh of the light to ensure interference. The factor 2 is due to the double path of the light through the HCF and reflected by the rear reflector.

In some examples, a combination of wavelength multiplexing and coherence multiplexing is employed. Additionally or alternatively, a combination with different pump lasers operating at different wavelengths for different gases is also possible.

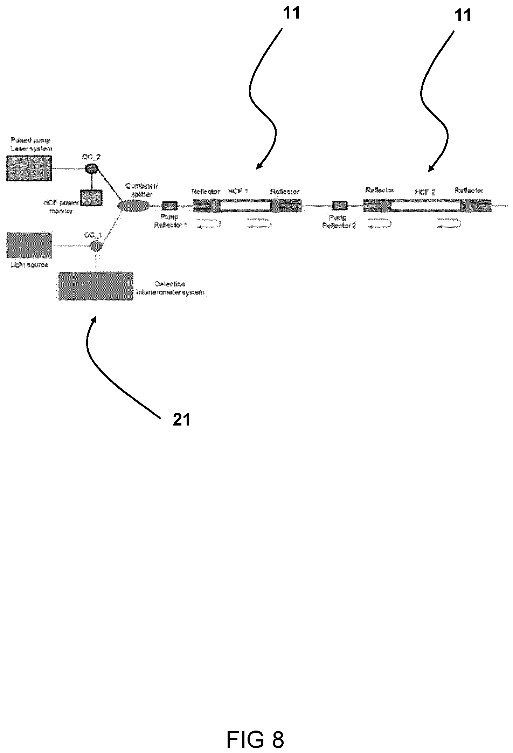

Fig. 8 shows a schematic diagram of an embodiment of a system 1 configured to use power monitoring between the HCF sections. In this example, reflectors are used to monitor the pulse pump laser power for the different HCF gas sensors. In some examples, an in line pump reflector may be utilized to reflect a small part of the pulsed pump laser optical power before a HCF gas sensor to the HCF power monitor for monitoring the stability of the pump laser pulse and the difference in the pulse pump laser power for the different HCF gas sensor. The typical reflectivity of the Pump Reflector may be relatively small, for example 1% or lower. The reflections from the different Pump Reflectors can be distinguished by the time delay.

It will be appreciated that various other examples are possible. In some examples, a light source with a wavelength monitoring interferometer is employed. Using a high sensitive wavelength measurement system can reduce the system noise and improve the detection limit of sensing. A preferred wavelength measurement technology is interferometry. In some examples, a laser pump system is employed with multiple pump lasers. In such examples, a single tunable pump laser can be replaced by multiple pump lasers.

It will be appreciated that the system according to the disclosure can be used in various applications. An example is a (EUV) lithography system. Such systems may require monitoring of partial pressure of oxidants at various places in the scanner. In the scanner oxidants are let in on one point and only at a single other point in the scanner using RGA the oxidant partial pressure can be monitored. There could be a need to control the amount of oxidants locally by every mirror. For controlling purposes it may be needed to measure it locally. This requires extremely small sensor which can be fitted in place. Several oxidants of interest may have absorption lines in the system according to the disclosure, therefore allowing them to be sensed. Also sensing of nitrogen(-complexes) and/or other gasses could be of interest for example. The system and method according to the disclosure may also be used in various other industries.

For H2 systems such as H2 fuel cell, it is critical to monitor the H2 purity to ensure the state-of-health of the system and normal operation and furthermore to prolong the lifetime. The contaminant control of the H2 fuel is stringent and requires ppm and ppb level detection sensitivity.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice for example using the interferometer output signal to calculate the phase changes in the HCF. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include data acquisition hardware, processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to `only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A measurement system for detecting a substance concentration in a medium, the system comprising:
a measurement optical fiber including a first reflecting element, a second reflecting element and a hollow core fiber arranged in between the first reflecting element and the second reflecting element, the hollow core fiber being configured to receive the medium by means of opening(s) to the hollow core fiber;
an excitation unit configured to generate a photothermal excitation effect in the core of the hollow core fiber; and
a sensing unit comprising a light source configured to direct light towards the measurement fiber with the hollow core fiber, wherein an incident light is divided on the first reflecting element of the measurement optical fiber into a transmitted light and a reflected light, and wherein the transmitted light returns to and passes the first reflecting element after being reflected by the second reflecting element of the measurement optical fiber, and wherein the reflected light and the returned transmitted light are guided to a detector by means of an optical line,
wherein the sensing unit is adapted to prevent interference between the reflected light and the returned transmitted light in the optical line.

2. The measurement system according to claim 1, wherein the sensing unit is configured to combine the reflected light and the returned transmitted light in the optical line without causing interference with each other.

3. The measurement system according to claim 1 or 2, wherein the incident light generated by the light source has a coherence length that is smaller than two times the optical path length between the first and second reflecting elements.

4. The measurement system according to claim 3, wherein the coherence length of the incident light is at least 10 percent smaller than two times the optical path length between the first and second reflecting elements, preferably at least 15 percent smaller, more preferably at least 20 percent smaller, even more preferably at least 30 percent smaller, most preferably at least 50 percent smaller.

5. The measurement system according to any one of the preceding claims, wherein the reflectivity of the first reflecting element and the second reflecting element are selected such that light of the sensing unit with a substantially same optical power is reflected from the first reflecting element and the second reflecting element to the optical line.

6. The measurement system according to any one of the preceding claims, wherein the detector is configured to create interference between the received reflected light and returned transmitted light.

7. The measurement system according to any one of the preceding claims, wherein the detector includes a beam splitter defining at least a first path and a second path, the second path being different from the first path, wherein the first path and the second path have different path lengths, wherein a difference in path length is chosen based on the distance between the first reflecting element and the second reflecting element so as to obtain interference when the beams are subsequently combined by means of a beam combiner.

8. The measurement system according to any one of the preceding claims, wherein the excitation unit is a photonic excitation unit configured to pump excitation light into the core of the hollow core fiber for inducing the photothermal excitation effect, wherein the incident light generated by the light source of the sensing unit has an operational wavelength not overlapping with a wavelength of light employed by the photonic excitation unit for generating the photothermal excitation effect in the core of the hollow core fiber.

9. The measurement system according to any one of the preceding claims, wherein a plurality of hollow core fiber sections with corresponding reflecting elements are arranged in series in one or more optical fibers, wherein the plurality of hollow core sections is excited by the same excitation unit, and wherein the detector is configured to interrogate the plurality of hollow core fiber sections.

10. The measurement system according to claim 9, wherein the plurality of hollow core fiber sections are multiplexed in a fiber network.

11. The measurement system according to claim 10, wherein the system is configured to perform wavelength multiplexing by means of wavelength selective reflecting elements or coherence multiplexing.

12. The measurement system according to any one of the preceding claims 5-11, wherein the detector has a path length of at least one of the paths defined by the beam splitter is selectable, wherein the path length is selectable by adjusting the path length or selecting an alternative path.

13. The measurement system according to any one of the preceding claims, wherein the detector includes an optical filter configured to filter of the photonic excitation unit.

14. A measurement method for detecting a substance concentration in a medium, the method including:
providing a measurement optical fiber including a first reflecting element, a second reflecting element and a hollow core fiber arranged in between the first reflecting element and the second reflecting element, the hollow core fiber being configured to receive the medium by means of opening(s) to the hollow core fiber;
providing an excitation unit configured to generate a photothermal excitation effect in the core of the hollow core fiber; and
providing a sensing unit comprising a light source configured to direct light towards the measurement fiber with the hollow core fiber, wherein an incident light is divided on the first reflecting element of the measurement optical fiber into a transmitted light and a reflected light, and wherein the transmitted light returns to and passes the first reflecting element after being reflected by the second reflecting element of the measurement optical fiber, and wherein the reflected light and the returned transmitted light are guided to a detector by means of an optical line,
wherein the sensing unit is adapted to prevent interference between the reflected light and the returned transmitted light in the optical line.

15. A lithography system including a system according to any one of the claims 1-13, or configured to perform the method according to claim 14, for measuring an amount of oxidants and/or chemical molecules within the lithography system.
